# EUROPEAN PATENT APPLICATION

(11) **EP 4 664 794 A1**
(43) Date of publication of application: **17.12.2025**
(21) Application number: 25180698.0
(22) Date of filing: 04.06.2025
(51) Int. Cl.: H04B 10/80, H04B 7/14

(54) **COMMUNICATION APPARATUS ACROSS BARRIER**

(30) Priority: 13.06.2024 US 202418742819
(71) Applicant: T-Mobile USA, Inc., Bellevue, WA 98006-1350 (US)
(72) Inventor: HO, Long Ching Macor, Bellevue, 98006 (US)
(74) Representative: Suddaby, Mark Edward

(57) **Abstract**

A communication apparatus and system for facilitating communications across a physical barrier are discussed herein. In some examples, the system may comprise a first unit to be mounted outside a window and a second unit to be mounted inside the window. A first unit may include at least a power unit, a Wi-Fi unit, and/or an optical unit. The second unit may also include at least a corresponding power unit. In some examples, the second unit may include a corresponding Wi-Fi unit and/or a corresponding optical unit. The first unit can determine capability information associated with the second unit and can configure the first unit based on the capability information. In some examples, the first unit can function as a Wi-Fi mesh system to provide a backhaul connection to access points(s) and/or wireless resources to user equipment.

## Description

### BACKGROUND

Today many mobile network operators provide high speed wireless internet services to their customers. One concern with mobile network internet services is that customers may experience a degradation of service when in an indoor environment. For instance, structures and walls of a building or home may often attenuate radio signals as the radio signals propagate or pass through. In some cases, customers may deploy outdoor radio frequency repeaters to amplify the radio signals to compensate for the expected attenuation. The outdoor repeater, while emitting an amplified signal, also creates interference for those outdoor users operating on the same frequency. Unfortunately, the radio frequency repeaters often retransmit entire frequency bands and can cause interference with a desired spectrum associated with wireless internet services, thereby reducing reception in outdoor environments. In this manner, the customer often has to choose between poor indoor service or poor outdoor services with respect to their properties. In another instance, the repeater may be placed indoors. However, the quality of the indoor signal may be degraded, with the repeater amplifying a poor-quality signal having low throughput. It is also possible the indoor signal will be degraded to the point where it is incoherent, resulting in the repeater amplifying noise.

A window mounted wireless (wireless standard) gateway system for mitigating radio frequency (RF) signal degradation or attenuation experienced in an indoor environment without introducing interference that may attenuate or degrade outdoor RF signals had been developed. In some cases, a mobile network may provide a wireless internet service via RF signals over a licensed or desired RF spectrum. For example, in some situations, building materials and structures, such as walls, may attenuate the RF signals. The attenuation may cause a degradation of mobile wireless service provided by a mobile network using RF technologies, particularly in the indoor environments. Such a window mounted Wi-Fi gateway system may include two paired units. The first unit may be configured for outdoor use, such as on the exterior of a window, and the second unit may be configured for indoor use, such as on the interior of the window. The outdoor unit may be aligned with the indoor unit, such that the units may communicate with each other via an optical link through the windowpane.

### BRIEF DESCRIPTION OF THE DRAWINGS

The detailed description is described with reference to the accompanying figures. In the figures, the left-most digit(s) of a reference number identifies the figure in which the reference number first appears. The use of the same reference numbers in different figures indicates similar or identical components or features.
FIG. 1 is an example block diagram of an architecture for a window mounted communication apparatus, according to some implementations.
FIG. 2 is another example block diagram of an architecture for a window mounted communication apparatus, according to some implementations.
FIGS. 3A, 3B, and 3C illustrate different examples of block diagrams for an outdoor unit coupling with various indoor units having different capabilities, according to some implementations.
FIG. 4 illustrates an example computing device to configure a window mounted communication apparatus, as discussed herein.
FIG. 5 is a flow diagram illustrating an example process associated with installing and configuring a window mounted communication apparatus, according to some implementations.

### DETAILED DESCRIPTION

A communication apparatus for facilitating communications across a physical barrier is discussed herein. In some examples a communication apparatus (or communication system, wireless gateway, and/or wireless access point) may comprise a first unit to be mounted outside a window (or on the first side of a barrier or medium) and a second unit to be mounted inside the window (or a second side of a barrier or medium). The first unit may include at least a power unit, a Wi-Fi unit, and/or an optical unit. The second unit may also include at least a corresponding power unit. In some examples, the second unit may include a corresponding Wi-Fi unit and/or a corresponding optical unit. When the first unit is initially coupled with the second unit, the first unit can determine capability information associated with the second unit and can configure the Wi-Fi unit and/or the optical unit on the first unit based on the capability information. In some examples, the first unit can function as a Wi-Fi mesh system to provide a backhaul connection to one or more access points associated with the interior side of the window and/or wireless resources to one or more devices (e.g., user equipment) in communication with the first unit. As discussed herein, the system and techniques allow for a window mounted communication apparatus or system to provide communications to various user equipment.

Although discussed in the context of a window-mounted communication apparatus, the systems and techniques discussed herein are applicable to any apparatus or system for conveying signals through a transparent medium, such as a window. In some examples, the techniques can be used in the context of non-transparent mediums, such as a bulkhead or other physical obstacle.

Further, although discussed in the context of "inside" and "outside" units associated with a window, the disclosure is not intended to be limited to such configurations. For example, the disclosure is applicable to a variety of contexts, such as implementations not involving indoor or outdoor descriptors. In some examples, unit(s) may be under water, underground, or in outer space, or may be used to provide communication link(s) through structural bulkhead(s) or pressure bulkhead(s). Examples where a first unit is located on a first side of a structure or barrier and a second unit is located on a second side of the structure or barrier are contemplated herein.

In general, and as previously noted, a window mounted Wi-Fi gateway system may mitigate radio frequency (RF) signal degradation or attenuation experienced in an indoor environment without introducing interference that may attenuate or degrade outdoor RF signals. In some cases, a mobile network may provide a wireless internet service via RF signals over a licensed or desired RF spectrum. For example, in some situations, building materials and structures, such as walls, may attenuate the RF signals. The attenuation may cause a degradation of mobile wireless service provided by a mobile network using RF technologies, particularly in the indoor environments.

In some implementations, the window mounted Wi-Fi communication system may include two paired units. The first unit may be configured for outdoor use, such as on the exterior of a window, and the second unit may be configured for indoor use, such as on the interior of the window. The outdoor unit may be aligned with the indoor unit, such that the second unit may provide power to the first unit via wireless power transmission. When the first unit and the second unit are initially coupled together, the first unit can determine capability information associated with the second unit. In some examples, the second unit can comprise a power supply and no communication apparatus. In some examples, the second unit can comprise a Wi-Fi unit and/or an optical unit to communicate with the first unit. The first unit can determine capability information associated with the second unit and can configure the Wi-Fi unit and/or the optical unit of the first unit to communicate with the corresponding Wi-Fi unit and/or the corresponding optical unit of the second unit. In some examples, if the second unit comprises a Wi-Fi unit and an optical unit, the techniques may include configuring an optical link between the two units, determining a connection status, and configuring a Wi-Fi connection between the units based on the connection status information. In some examples, the first unit may configure the Wi-Fi unit to function as a mesh network to communicate with one or more wireless access points associated with the interior portion of the window and/or other devices in the environment.

As an illustrative example, the outdoor unit may include one or more antennas and a wireless modem for receiving and decoding the RF signals (e.g., the network wireless transmission broadcast, for instance, from one or more network towers, small cells, or other wireless network infrastructure). The system may convert the decoded RF signals into a Wi-Fi and/or optical-based signal that may be transmitted by a transmitter through the glass to an aligned or paired receiver in the indoor unit. The indoor unit may then convert the Wi-Fi based and/or optical-based signal into a wired and/or wireless indoor signal which may be distributed throughout the indoor environment, via a router, to a user equipment (UE) or other access point(s). The indoor unit may receive a wireless signal (such as a response signal) from the UE (or from an access point) at the router within the indoor environment. The indoor unit may then convert the wireless signal to a Wi-Fi based and/or an optical-based signal and transmit through the windowpane back to a receiver in the outdoor unit. The outdoor unit may convert the optical-based signal to an RF signal and transmit or send the user's data packet to a destination over the network.

In this manner, unlike conventional RF repeaters that amplify the RF signals that may interfere with the spectrum associated with wireless internet services and may reduce reception in outdoor environments, the window mounted Wi-Fi gateway system provides for indoor home network or modem services without interfering with outdoor performance of the mobile network. Examples of such window-mounted wireless systems are provided in U.S. Application Serial No. 18/232,486, filed August 10, 2023, and U.S. Application Serial No. 18/417,214, filed January 19, 2024. Application Nos. 18/232,486 and 18//417,214 are hereby incorporated by reference in their entirety and for all purposes.

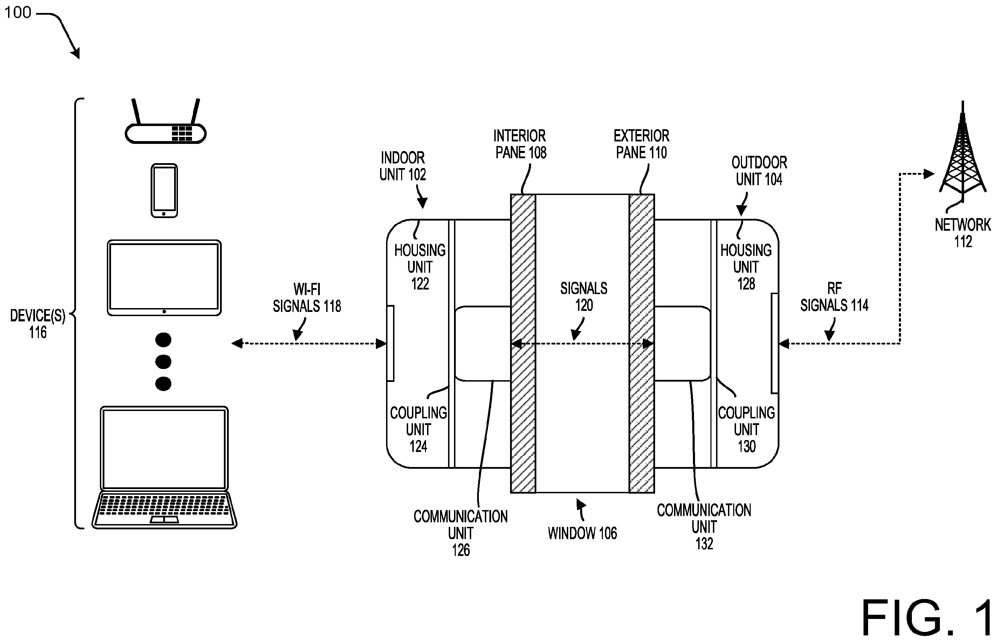

FIG. 1 is an example block diagram of an architecture for a window mounted communication apparatus 100, according to some implementation. In particular, the communication apparatus may receive radio frequency (RF) signals from a base station and can convert the RF signals into one or more of Wi-Fi signals or optical signals for transmission across a transparent medium to provide communication services to devices on the other side of the transparent medium.

In some examples, the window mounted communication apparatus 100 can be referred to as a communication apparatus, a wireless gateway, a wireless access point, and the like.

In some examples, the communication apparatus 100 includes an indoor unit 102 and an outdoor unit 104. The indoor unit 102 and the outdoor unit 104 may be aligned on opposing sides (e.g., the interior and exterior, respectively) of window 106 having one or more panes of glass (or other transparent material), such as an interior pane 108 and an exterior pane 110 illustrated in the current example. The alignment may be configured such that one or more transmitters operating in multiple frequency bands of the indoor unit 102 align with one or more receivers of the outdoor unit 104 (also referred to as an "exterior unit 104") and one or more receivers of the indoor unit 102 align with one or more transmitters of the exterior unit 104. For instance, an optical receiver of the indoor unit 102 may align with an optical transmitter of the outdoor unit 104 and an optical receiver of the outdoor unit 104 may align with an optical transmitter of the indoor unit 102.

In some examples, and without limitation, the outdoor unit 104 can communicate with the indoor unit 102 using Wi-Fi signals. In some examples, apparatus may use an omnidirectional antenna, and in such instances, alignment may be less critical than when using an optical transmission. However, in some examples the outdoor unit 104 may still receive power from the indoor unit 102, so the units may be aligned sufficient to allow for power transfer.

As discussed herein, and in some examples, the outdoor unit 104 may comprise a single or multiple optical sensor(s) that can transmit and receive data to and from a single or multiple optical sensor(s) associated with the indoor unit 102. In some examples, the outdoor unit 104 can comprise a single or multiple Wi-Fi units that allow data transfer to a corresponding Wi-Fi unit of the indoor unit 102 or other devices (e.g., the devices 116 illustrated in FIG. 1). In some examples, the outdoor unit 104 may include no optical unit and may instead comprise one or more Wi-Fi units. In some examples, the outdoor unit 104 may comprise no Wi-Fi unit and may comprise one or more optical units.

In the current example, the outdoor unit 104 may be in wireless communication with a network 112, such as a mobile network (or a base station such as an eNodeB or a gNodeB) providing high speed wireless internet services to an end-user. In this manner, the outdoor unit 104 may be configured to receive incoming data via RF signals 114 received from the network 112 and to transmit outgoing data via RF signals 114 sent to the network 112. Likewise, the indoor unit 102 may be in wireless communication with one or more devices 116, such as smart phones, televisions, smart appliances, tablets, personal computers, routers, modems, wearable devices, Internet of Things ("IoT") devices, and the like associated with the end-user. In this manner, the indoor unit 102 may be configured to receive outgoing data via wireless signals 118 received from the devices 116 and to transmit incoming data via wireless signals 118 sent to the devices 116.

In some examples, the network 112 can be configured to communicate via any wireless protocol, including but not limited to, 2G, 3G, 4G, 4G LTE, 5G, Wi-Fi, Bluetooth, Bluetooth Low Energy, Long Range Wide Area Network (LoRaWAN), RFID, and the like.

In some cases, the alignment between the indoor unit 102 and the outdoor unit 104 may be configured to accommodate one or more coatings applied to the window 106 (e.g., a low-energy coating, tint, argon gas layer, or the like). In this manner, the system 100 may be configured to provide an installation or set-up assistant, such as via a paired downloadable application on a device 116. For instance, as one illustrative example, a user may apply or adhere the exterior unit 104 to an exterior of a window 106 of their home environment. The user may also download an application to the UE 116. The user may also pair the application hosted on the UE 116 to the interior unit 102 (such as over a home network, Bluetooth, or the like). In some examples, the outdoor unit 104 can be fixed to the window using magnets (coupled to the indoor unit 102), suction cups, adhesive, and the like.

The application may then test the alignment of the indoor unit 102 and the outdoor unit 104 to determine if the connection quality of signals 120 meets or exceeds a threshold (e.g., for bandwidth, signal-to-interference-plus-noise ratio (SINR), etc.). In some examples, if optical sensors are used to exchange the signals 120 and the connection is below a threshold, the outdoor unit 104 can communicate with the indoor unit 102 and/or the devices 116 via a Wi-Fi connection, as discussed herein.

In some examples, the indoor unit 102 and/or the outdoor unit 104 may execute a program to test or otherwise verify a quality of the connection between the indoor unit 102 and the outdoor unit 104. In some examples, the application may be initiated and may provide a binary indication of whether the connection quality meets or exceeds a threshold quality level. By way of example and without limitation, the indoor unit 102 may include a button that, when pressed, causes execution of the connection quality testing application and outputs a result of the test as a binary indication (e.g., the indoor unit 102 can illuminate a green LED to indicate the test is passed or a red LED to indicate the test has failed). Additional examples of configuring the communication system 100 are discussed throughout this disclosure.

As FIG. 1 further illustrates, the indoor unit 102 may comprise a housing unit 122, a coupling unit 124, and a communication unit 126. In some examples, the communication unit 126 may be movably coupled to the coupling unit 124 with one or more degrees of freedom in the x-direction, the y-direction, and/or in the z-direction. In some examples, the coupling unit 124 can be rigidly coupled with the housing unit 122, and in some examples, the coupling unit 124 and the housing unit 122 can be integrated as a single unit.

As further illustrated, the outdoor unit 104 includes a corresponding housing unit 128, a coupling unit 130, and a communication unit 132. Similar to the indoor unit 102, in some examples, the communication unit 132 may be movably coupled to the coupling unit 130 with one or more degrees of freedom in the x-direction, the y-direction, and/or in the z-direction. In some examples, the coupling unit 130 can be rigidly coupled with the housing unit 128, and in some examples, the coupling unit 130 and the housing unit 128 can be integrated as a single unit.

As can be understood, in some examples, the communication unit 126 and/or the communication unit 132 can include a Wi-Fi unit, and optical unit, and/or other communication unit (e.g., audio based). In some examples, the capabilities of the communication units 126 and 132 may or may not correspond (e.g., the communication unit 132 may include first capabilities and the communication unit 126 may include second capabilities that are different than the first capabilities).

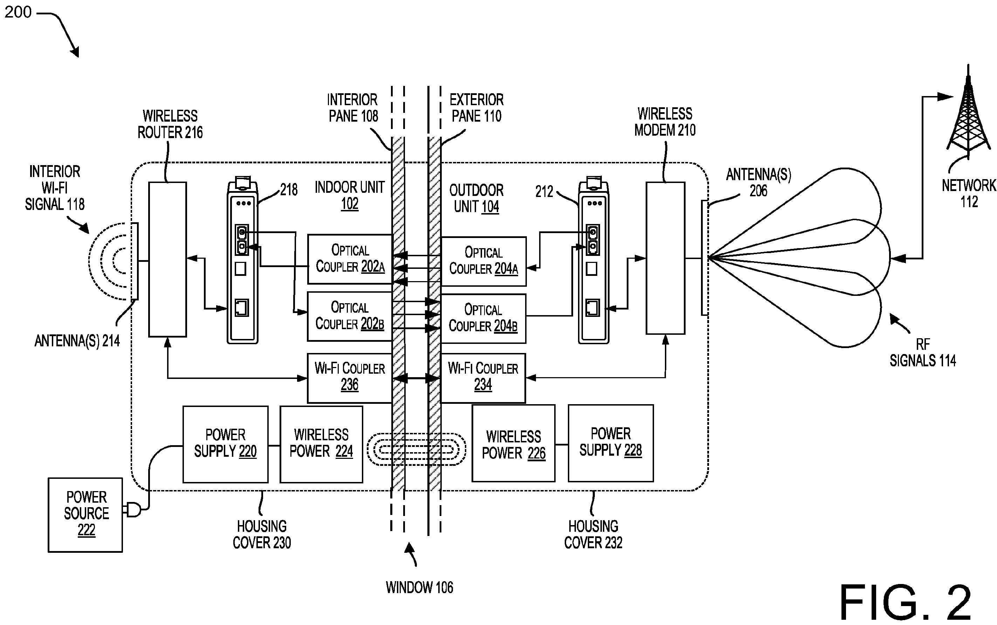

FIG. 2 is another example block diagram of an architecture for a window mounted communication apparatus (or system) 200, according to some implementations.

In the current example, the window mounted communication system 200 includes the indoor unit 102 and the outdoor unit 104. As previously described, the indoor unit 102 and the outdoor unit 104 may be aligned (as described with respect to FIG. 1) on opposing sides (e.g., the interior and exterior, respectively) of the window 106 having one or more panes of glass (such as the interior pane 108 and the exterior pane 110 illustrated in the current example).

The alignment may be configured such that a first optical coupler 202a (or transducer, collimator, detector, or the like) of the indoor unit 102 aligns with a first optical coupler 204a (or transducer, collimator, laser, or the like) of the exterior unit 104, such that data may be transmitted from the first optical coupler 204a of the exterior unit 104 to the first optical coupler 202a of the indoor unit 102. Likewise, a second optical coupler 202b of the indoor unit 102 aligns with a second optical coupler 204b of the exterior unit 104, such that data may be transmitted from the second optical coupler 202b of the indoor unit 102 to the second optical coupler 204b of the exterior unit 104. For instance, the optical couplers 202a and 202b may output the data as an optical-based signal that may be received by the optical couplers 204a and 204b, respectively. While FIG. 2 illustrates two optical coupler pairs (202a, 204a; 202b, 204b), it is to be understood that the example of FIG. 2 may include one or multiple optical coupler pair(s).

The outdoor unit 104 may also include one or more antenna(s) 206 positioned with respect to an antenna aperture. The antenna(s) 206 may be coupled to one or more wireless modem(s) 210 and/or media converter 212. The wireless modem(s) 210 may be configured to decode the RF signals received by the antennas 206 from one or more networks, such as network 112 of FIG. 1. The wireless modem 210 (which may also be combined modem and router) and/or media converter 212 may be in electronic communication with the optical couplers 204a and 204b. In the current example, the antenna 206 may be a beam forming antenna that may direct the coverage of the system 200 in a desired direction or configuration with respect to the network 112.

In the current example, the antenna(s) 206 may be configured to provide beam forming to improve signal reception and/or transmission with respect to omnidirectional antenna responses and the RF signals 114. In some cases, the antenna(s) 206 may include multiple antennas that are configured to have adjustable phase and amplitude to generate beam or focused area of coverage. In the focused area of coverage, the antenna(s) 206 may provide increased signal strength and/or range, improved signal quality, and otherwise enhanced network capabilities. In these examples, the antenna(s) 206 may be adjusted to have a beam shaped in the direction of a nearest proximate cellular tower or the like.

The indoor unit 102 may include one or more antenna(s) 214 positioned with respect to an antenna aperture. The antenna(s) 214 may be coupled to a wireless router 216. In some examples, the wireless router 216 may be referred to as a wireless access point 216. The wireless router 216 of the indoor unit 102 may be configured to decode the interior Wi-Fi signals 118 received by the antenna(s) 214 from, for instance, a UE or access point within the interior environment. The wireless router 216 may be in electronic communication with the optical couplers 202a and 202b.

As noted above, in some examples, the wireless router 216 may function as a wireless access point. In some examples, the wireless router 210 may handle some or all the routing functions, including but not limited to DHCP functions, firewall functions, and the like. In some case, the indoor unit (e.g., 216) can handle the firewall functions, DHCP functions, and/or routing functions. In some cases, both the indoor unit (e.g., 210) and outdoor unit (e.g., 216) can perform routing functions and/or firewall functions (e.g., as a double NAT configuration).

In some examples, the wireless router 216 may be coupled to one or more UEs or other routers or switches via a wired connection, such as a fiber-optic cable, an ethernet cable, a coaxial cable, and the like.

In the current example, the indoor unit 102 may include one or multiple converter 218 (such as a media converter or the like) to decode and/or translate interior Wi-Fi signals 118 (such as representative of media files) and/or signals (such as representative of media files) received from the optical coupler 202a prior to delivering to the wireless router 216. Likewise, the outdoor unit 104 may include the converter(s) 212 (such as a media converter or the like) to decode and/or translate RF signals 114 (such as representative of media files) and/or signals (such as representative of media files) received from the optical coupler 204a.

In some examples, the outdoor unit 104 can include a Wi-Fi coupler 234 to send and/or receive Wi-Fi signals to a corresponding Wi-Fi unit 236 included in the indoor unit 102 and/or to other devices (e.g., UEs and/or access points) in the interior portion or a room, for example. In some examples, the Wi-Fi coupler 234 can transmit 5Gz, 6Ghz, or other radio frequencies to the indoor unit 102 (e.g., when configured with a corresponding W-Fi unit) and/or to one or more other devices 116. In some examples, the W-Fi coupler 234 can operate as a mesh network to provide a first portion of bandwidth as a backhaul (e.g., a backhaul connection) to other access points and a second portion to other UEs.

In some examples, the indoor unit 102 can include the Wi-Fi unit 236. In some examples, the Wi-Fi unit 236 can receive and/or transmit Wi-Fi signals from/to the Wi-Fi unit 234.

As described with respect to FIG. 2, the indoor unit 102 may also include a power supply 220 that may be coupled to a power source 222 (such as an outlet in the interior environment). The power supply 220 may provide power to the indoor unit 102 and act (or otherwise function) as a power source for the outdoor unit 104. For instance, the power supply 220 may be coupled to a wireless power transmitter 224 to output a power signal such as an inductive power supply signal. The outdoor unit 104 may be equipped with a wireless power receiver 226 that may be charged by or capture the inductive power supply signal. The wireless power receiver 226 may be coupled to a power supply 228 of the outdoor unit 104. In implementations, the wireless power transmitter 224 and wireless power receiver 226 may be in the form of cooperating coils. The indoor unit 102 may include a housing cover 230 and the outdoor unit 104 may include a housing cover 232. In some examples, the housing cover 230 may correspond to the housing unit 122, and in some examples, the housing cover 232 may correspond to the housing unit 128.

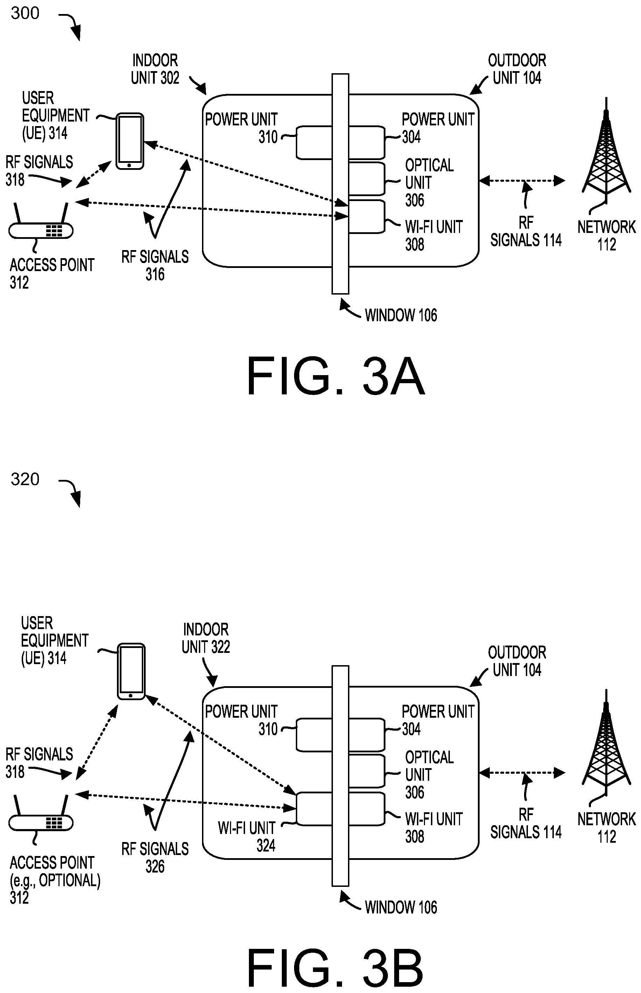

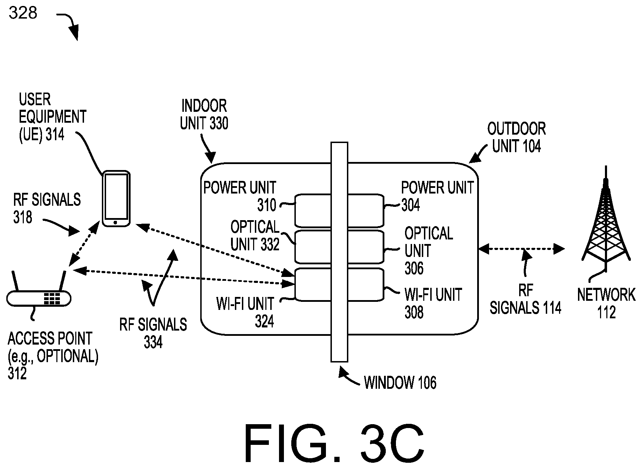

FIGS. 3A, 3B, and 3C illustrate different examples of block diagrams for an outdoor unit coupling with various indoor units having different capabilities, according to some implementations.

FIG. 3A illustrates a block diagram 300 of the outdoor unit 104 coupled to a first indoor unit 302. As illustrated, the outdoor unit 104 comprises a power unit 304, an optical unit 306, and a Wi-Fi unit 308. As illustrated, the indoor unit 302 comprises a power unit 310 configured to provide power to the outdoor unit 104 via the power unit 304.

Because the indoor unit 302 does not include a communication unit (e.g., the indoor unit 302 does not include a Wi-Fi unit and/or an optical unit), the indoor unit 302 does not receive Wi-Fi signals output by the Wi-Fi unit 308. In some examples, the outdoor unit 104 can communicate with an access point 312 and one or more user equipment (UEs) 314 via signals 316. In some examples, the Wi-Fi unit 308 can form a mesh network with the access point 312 such that the UE 314 can communicate directly with the outdoor unit 104 via the Wi-Fi unit 308 and/or via the access point 312 via RF signal 318.

By way of example and without limitation, the UE 314 could be referred to as be communicatively coupled with the access point 312 via the RF signals 318. Further, the UE 314 can be communicatively coupled with the outdoor unit 104 via the RF signals 316. And still further, the UE 314 can be communicatively coupled with the network 112 via RF signals 314 and the RF signals 316 and/or 318.

FIG. 3B illustrates a block diagram 320 of the outdoor unit 104 coupled to a second indoor unit 322. As illustrated, the indoor unit 322 includes the power unit 313 and a Wi-Fi unit 324. In this example, the Wi-Fi unit 324 can receive and/or transmit RF signals from/to the Wi-Fi unit 308 to facilitate communications with the access point 312 and/or the UE 314.

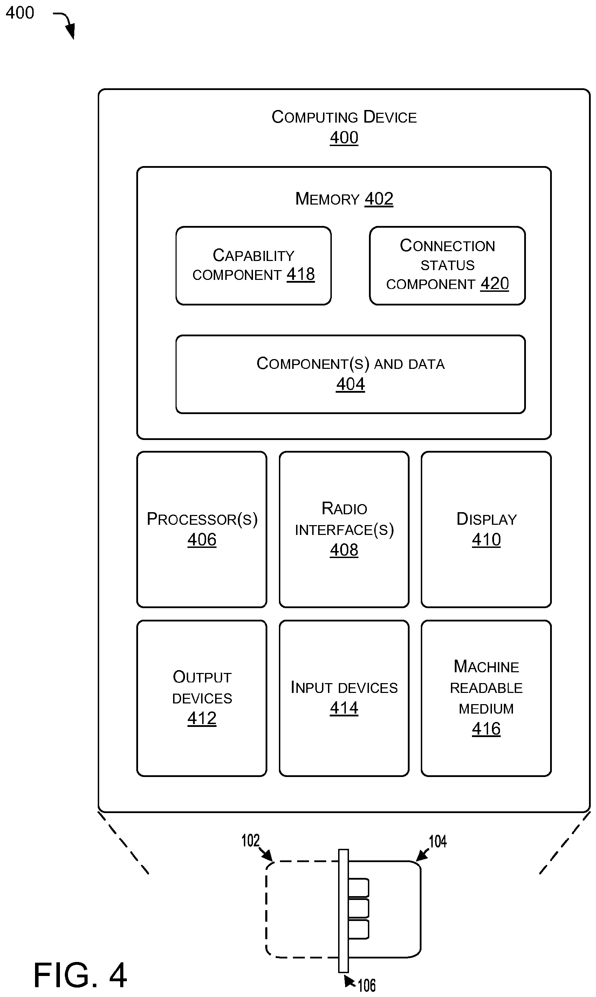

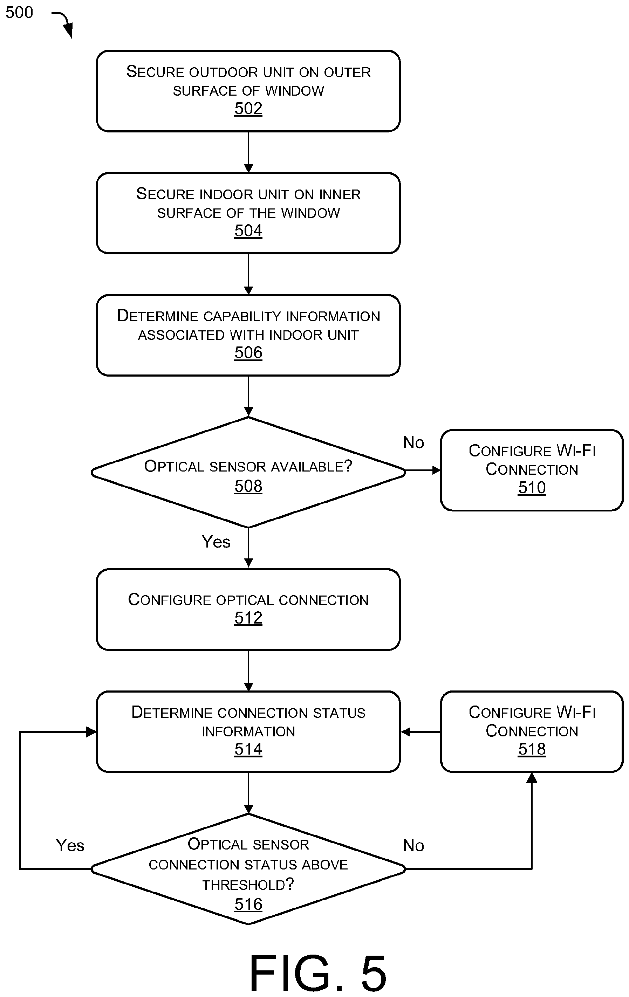

As illustrated, the access point 312 and the UE 314 can receive RF signals 326 to and from the Wi-Fi unit 324. Additionally, the access point 312 and/or the UE 314 can directly communicate with the Wi-Fi unit 308 via the RF signals 316 (not shown in FIG. 3B). In some examples, and as discussed below in conjunction with FIGS. 4 and 5, and throughout this disclosure, the outdoor unit 104 can determine capability information associated with the indoor unit 322 to determine that the indoor unit comprises the Wi-Fi unit 324. In some examples, the Wi-Fi unit 308 can select a Wi-Fi channel, power level, frequency resource, etc. based on the capability information associated with the indoor unit 322. Accordingly, the devices 312 and/or 314 can communicate with the network 112 via a Wi-Fi connection with the indoor unit 322 and/or the outdoor unit 104.

FIG. 3C illustrates a block diagram 328 of the outdoor unit 104 coupled to a third indoor unit 330. As illustrated, the indoor unit 322 includes the power unit 310, the Wi-Fi unit 324, and an optical unit 332. In some examples, the optical unit 332 can communicate with the corresponding optical unit 306 of the outdoor unit 104. In some examples, because the indoor unit 330 includes both the Wi-Fi unit 324 and the optical unit 332, the outdoor unit 104 can determine capability information associated with the indoor unit 330 and can configure operation to use one or both of the optical transmission/reception paths and/or the Wi-Fi transmission/reception between the indoor unit 330 and the outdoor unit 104.

Although FIG. 3C illustrates the RF signals 334 from the Wi-Fi unit 324, data carried by the RF signals 334 can be transmitted/received by the optical unit 332. Also, although not illustrated in FIG. 3C, the access point 312 and the UE 314 can communicate directly with the Wi-Fi unit 308 via RF signals 316, depending on signal strengths and other heuristics.

FIG. 4 illustrates an example computing device 400 to configure a window mounted communication apparatus, as discussed herein. In some examples, the computing device 400 can correspond to the outdoor unit 104 of FIG. 1. It is to be understood in the context of this disclosure that the computing device 400 can be implemented as a single device, as a plurality of devices, or as a system with components and data distributed among them.

As illustrated, the computing device 400 comprises a memory 402 storing a capability component 418, a connection status component 420, and/or component(s) and data 404. Also, the computing device 400 includes processor(s) 406, radio interface(s) 408, a display 410, output devices 412, input devices 414, and a machine readable medium 416.

In various implementations, the memory 402 is volatile (such as RAM), nonvolatile (such as ROM, flash memory, etc.) or some combination of the two. The capability component 418, the connection status component 420, and the component(s) and data 404 stored in the memory 402 can comprise methods, threads, processes, applications or any other sort of executable instructions. The capability component 418, the connection status component 420, and the component(s) and data 404 can also include files and databases.

In general, the capability component 418 can include functionality to determine capability information about an indoor unit (or corresponding unit) that the computing device is couple to. That is, in some examples, the capability component 418 can include functionality to determine if a corresponding unit includes a Wi-Fi unit and/or optical sensor(s). Further, with respect to the Wi-Fi unit determination, the capability component 418 can determine a network identifier (a SSID), mesh characteristics (e.g., backhaul type, backhaul channel, width of the backhaul, and the like). In some examples, the capability component 418 can determine capabilities and specifics of the corresponding Wi-Fi unit and can configure the Wi-Fi unit in the computing device 400 to communicate with a corresponding unit. In the event the corresponding unit does not have a Wi-Fi unit, the capability component 418 can configure the computing device accordingly.

With respect to an optical sensor determination, the capability component 418 can determine whether the corresponding has one or more optical sensors, the physical location (and compatibility), whether different optical units are bidirectional or unidirectional, a protocol type for exchanging data, and the like.

In some examples, the capability component 418 can further determine or receive information from the corresponding unit to make determinations about the capability. In some examples, the capability component 418 can send requests to a corresponding unit and can wait for a response. In some examples, the capability component 418 can attempt to establish communication using the various Wi-Fi unit(s) and/or the optical unit(s) and can make the determination on whether a connection was made and the characteristics of the connection. In some examples, the capability component 418 can run a self-test to test the availability of connection types and characteristics of the connection (e.g., bandwidth, latency, jitter, throughput, encoding scheme, encryption, and the like). Different examples of capability information are discussed throughout the disclosure.

In some examples, the connection status component 420 can include functionality to determine connection status information associated with connection(s) by and between the computing device and corresponding units or devices connected to the computing device. For example, the connection status component 420 can determine characteristics of any optical connection with a corresponding unit (e.g., an "indoor unit"), any Wi-Fi connection with the corresponding unit, and/or any W-Fi connection directly with other access points and/or user equipment. In some examples, the connection status component 420 can determine one or more of bandwidth, latency, SINR (signal to interference and noise ratio), jitter, a number of dropped packets, a number of un-dropped packets, whether a connection supports a particular Quality of Service (QoS) connection, and the like. In some examples, the connection status component 420 can determine a health of connections to other devices and/or a health of a backhaul provided by the computing device in the context with a mesh network. Additional status information determined by the connection status component 420 are discussed herein.

In various examples, the processor(s) 406 can be a central processing unit (CPU), a graphics processing unit (GPU), or both CPU and GPU, or any other type of processing unit. Each of the one or more processor(s) 806 may have numerous arithmetic logic units (ALUs) that perform arithmetic and logical operations, as well as one or more control units (CUs) that extract instructions and stored content from processor cache memory, and then executes these instructions by calling on the ALUs, as necessary, during program execution. The processor(s) 406 may also be responsible for executing all computer applications stored in the memory 402, which can be associated with common types of volatile (RAM) and/or nonvolatile (ROM) memory.

The radio interfaces 408 can include transceivers, modems, interfaces, antennas, and/or other components that perform or assist in exchanging radio frequency (RF) communications with base stations of the telecommunication network, a Wi-Fi access point, and/or otherwise implement connections with one or more networks. For example, the radio interfaces 408 can be compatible with multiple radio access technologies, such as 5G radio access technologies and 4G/LTE radio access technologies. Accordingly, the radio interfaces 408 can allow the computing device 400 to connect to various components as described herein.

The display 410 can be a liquid crystal display or any other type of display commonly used in computing devices. For example, display 410 may be a touch-sensitive display screen, and can then also act as an input device or keypad, such as for providing a soft-key keyboard, navigation buttons, or any other type of input. The output devices 412 can include any sort of output devices known in the art, such as the display 410, speakers, a vibrating mechanism, and/or a tactile feedback mechanism. Output devices 412 can also include ports for one or more peripheral devices, such as headphones, peripheral speakers, and/or a peripheral display. The input devices 414 can include any sort of input devices known in the art. For example, input devices 414 can include a microphone, a keyboard/keypad, and/or a touch-sensitive display, such as the touch-sensitive display screen described above. A keyboard/keypad can be a push button numeric dialing pad, a multi-key keyboard, or one or more other types of keys or buttons, and can also include a joystick-like controller, designated navigation buttons, or any other type of input mechanism.

The machine readable medium 416 can store one or more sets of instructions, such as software or firmware, that embodies any one or more of the methodologies or functions described herein. The instructions can also reside, completely or at least partially, within the memory 402, processor(s) 406, and/or radio interface(s) 408 during execution thereof by the computing device 400. The memory 402 and the processor(s) 406 also can constitute machine readable media 416.

The various techniques described herein may be implemented in the context of computer-executable instructions or software, such as program modules, that are stored in computer-readable storage and executed by the processor(s) of one or more computing devices such as those illustrated in the figures. Generally, program modules include routines, programs, objects, components, data structures, etc., and define operating logic for performing particular tasks or implement particular abstract data types.

Other architectures may be used to implement the described functionality and are intended to be within the scope of this disclosure. Furthermore, although specific distributions of responsibilities are defined above for purposes of discussion, the various functions and responsibilities might be distributed and divided in different ways, depending on circumstances.

Similarly, software may be stored and distributed in various ways and using different means, and the particular software storage and execution configurations described above may be varied in many different ways. Thus, software implementing the techniques described above may be distributed on various types of computer-readable media, not limited to the forms of memory that are specifically described.

FIG. 5 is a flow diagram illustrating an example process 500 associated with installing and configuring a window mounted wireless gateway system, according to some implementations. The process is illustrated as a collection of blocks in a logical flow diagram, which represent a sequence of operations, some or all of which can be implemented in hardware, software, or a combination thereof. In the context of software, the blocks represent computer-executable instructions stored on one or more computer-readable media that, when executed by one or more processor(s), performs the recited operations. Generally, computer-executable instructions include routines, programs, objects, components, encryption, deciphering, compressing, recording, data structures and the like that perform particular functions or implement particular abstract data types.

The order in which the operations are described should not be construed as a limitation. Any number of the described blocks can be combined in any order and/or in parallel to implement the processes, or alternative processes, and not all of the blocks need be implemented or executed. For discussion purposes, the processes herein are described with reference to the frameworks, architectures and environments described in the examples herein, although the processes may be implemented in a wide variety of other frameworks, architectures or environments.

At operation 502, the process may include securing an outdoor unit (also referred to as a first unit) on an outer surface of a window. In some examples, the operation 502 may include temporarily fixing the outdoor unit (e.g., the outdoor unit 104 ) to an outer surface (e.g., 110) of a window (e.g., 106). This operation 502 may include using tape or suction cup(s) or other adhesive means to secure the outdoor unit.

At operation 504, the process may include securing an indoor unit (also referred to as a second unit) on an inner surface of the window. In some examples, the operation 504 may include placing the indoor unit (e.g., the indoor unit 102) on an interior surface (e.g., 108) of the window (e.g., 106) to couple the indoor unit (e.g., 102) with the outdoor unit (e.g., 104). In some examples, the indoor unit 102 and the outdoor unit 104 can include corresponding magnets having degrees of freedom that, when properly couple, cause the respective units to align to facilitate communication (optical or otherwise) between the units.

In some examples, the operation 504 can include coupling the optical units and the housing units at the same time, and in some examples, the optical units can be aligned first, followed by aligning the housing units. In some examples, because of the degrees of freedom afforded the optical units, the optical units will naturally self-align and couple prior to the housing units aligning and coupling.

At operation 506, the process may include determining capability information associated with the indoor unit. For example, the operation 506 can include determining whether the indoor unit comprises optical sensor(s) and/or a Wi-Fi unit to provide communications between the indoor unit and the outdoor unit. In some examples (and as illustrated in FIGS. 3A-3C and throughout this disclosure), the operation 506 can include determining that the indoor unit does not have any communication capabilities or that the indoor unit comprises an optical unit and/or a Wi-Fi unit.

At operation 508, the process can include determining whether an optical sensor is available. In some examples, the operation 508 can be based in part on the capability information determined in the operation 506. In some examples, if the optical sensor is not available ("no" in the operation 508), the process continues to operation 510.

At operation 510, the process can include configuring a Wi-Fi connection. In some examples, the operation 510 can include searching for any access points attempting to couple with the outdoor unit. If an access point is available and is attempting to communicate with the outdoor unit, the operation 510 can include configuring the Wi-Fi unit as a mesh network. In such a case, a first portion of RF resources can be allocated to a backhaul and a second portion of RF resources can be allocated to other devices.

In some examples, if the optical sensor is available ("yes" in the operation 508) the process continues to operation 512.

At operation 512, the process can include configuring the optical connection. In some examples, the operation 512 can include configuring the optical sensor(s) of the outdoor unit to communicate with corresponding optical sensor(s) on the indoor unit (or the second unit).

At operation 514, the process can include determining connection status information. In some examples, the operation 514 can include testing the optical connection to determine one or more of a bandwidth, signal strength, SINR, number of dropped or un-dropped packets, etc. of the optical connection between the indoor unit and the outdoor unit. In some examples, the operation 514 can include testing the uplink and downlink connections separately or together.

In some examples, the operation 514 can include determining a bandwidth of the optical connection relative to demands of devices connected to the indoor unit and/or the outdoor unit. For example, the operation 514 can include determining that individual UEs or access points are sending/receiving some first amount of data and that an optical connection between the indoor unit and the outdoor unit can include sending/receiving some second amount of data.

At operation 516, the process may include determining whether the optical sensor connection status is above a threshold. In some examples, the threshold can be a static threshold and in some examples, the thresholds can be based in part on an estimated window size (e.g., thickness), material, a number of devices connected to the system (e.g., the indoor unit and/or the outdoor unit), etc.

If the connection status does not meet or exceed a threshold (e.g., "no" in operation 516), the process can proceed to operation 518 which can include configuring the Wi-Fi connection. In some examples, the operation 518 can include similar features as those discussed in connection with the operation 510. In some examples, after the Wi-Fi connection is configured in the operation 518, the process can continue to operation 514 to send a message to a user to adjust the outdoor unit and/or the indoor unit (to improve the alignment for the optical connection). The operation 514 can include retesting the optical connection.

In some examples, if the optical sensor connection status meets or exceeds the threshold ("yes" in the operation 516), the communication system can use the optical connection to send/receive data, and periodically, the process can loop back to the operation 514 to periodically determine connection status information, as discussed herein.

In some examples, the operation 516 can include outputting an indication (e.g., for a user) to instruct the use to adjust the outdoor unit and/or the indoor unit. In some examples, the operation 514 and/or 516 can include testing the optical connection during the adjusting operation to provide instantaneous feedback to a user regarding the connection quality.

Accordingly, unlike conventional repeaters, the window mounted wireless gateway system extends the mobile internet coverage indoors without introducing interference in the outdoor environment.

Although the subject matter has been described in language specific to structural features and/or methodological acts, it is to be understood that the subject matter defined in the appended claims is not necessarily limited to the specific features or acts described. Rather, the specific features and acts are disclosed as exemplary forms of implementing the claims.

## Claims

1. A first communication apparatus for wireless communications, the first communication apparatus configured to couple to a first side of a transparent material, the first communication apparatus comprising:
a first antenna to wirelessly communicate with a base station to provide a signal to one or more devices communicatively coupled to the first communication apparatus or a second communication apparatus;
a second antenna configured to communicate wirelessly with one or more of the one or more devices or the second communication apparatus; and
a wireless power receiver configured to receive power from the second communication apparatus for operating the first communication apparatus.

2. The first communication apparatus of claim 1, further comprising an optical sensor configured to communicate optically with a second optical sensor of the second communication apparatus positioned on a second side of the transparent material.

3. The first communication apparatus of claim 2, further comprising:
one or more processors and one or more non-transitory computer-readable media storing computer executable instructions that, when executed, cause the one or more processors to perform operations comprising:
determining capability information associated with a wireless communication capability of the second communication apparatus, and configuring at least one of the second antenna or the optical sensor based at least in part on the capability information;
or
determining connection status information associated with an optical connection between the first communication apparatus and the second communication apparatus, and configuring at least one of the second antenna or the optical sensor based at least in part on the connection status information.

4. The first communication apparatus of any preceding claim, wherein:
the first antenna is configured to communicate with the base station via one or more of Fourth Generation (4G) or Fifth Generation (5G) wireless protocols; and
the second antenna is configured to communication with the one or more of the one or more devices or the second communication apparatus via Wi-Fi protocols.

5. The first communication apparatus of any preceding claim, wherein the transparent material is a window, and the first communication apparatus is mounted on an outside surface of the window and the second communication apparatus is mounted on an inside surface of the window.

6. The first communication apparatus of any preceding claim, wherein the second antenna is configured to communicate wirelessly with a third antenna included in the second communication apparatus.

7. The first communication apparatus of any preceding claim, wherein the second antenna is configured to transmit:
a first portion of wireless resources as a backhaul connection to the second communication apparatus or a wireless access point remote from the first communication apparatus and the second communication apparatus; and
a second portion of the wireless resources as communications with the one or more devices.

8. A system for wireless communications, the system comprising:
a first communication apparatus of any one of claims 1 to 4;
a second communication apparatus configured to couple to a second side of the transparent material, the second communication apparatus comprising:
a wireless power transmitter configured to transmit the power from the second communication apparatus to the first communication apparatus for operating the first communication apparatus.

9. The system of claim 8, wherein the transparent material is a window, and the first communication apparatus is mounted on an outside surface of the window and the second communication apparatus is mounted on an inside surface of the window.

10. The system of claim 8 or 9, wherein the second antenna is configured to communicate wirelessly with a third antenna included in the second communication apparatus.

11. The system of any of claims 8 to 10, wherein the second antenna is configured to transmit:
a first portion of wireless resources as a backhaul connection to the second communication apparatus or a wireless access point remote from the first communication apparatus and the second communication apparatus; and
a second portion of the wireless resources as communications with the one or more devices.

12. A method comprising:
determining, by a first communication apparatus configured to couple to a first side of a transparent material, capability information associated with a wireless communication capability of a second communication apparatus configured to couple to a second side of the transparent material opposite the first side;
configuring at least one of a Wi-Fi antenna or an optical sensor of the first communication apparatus based at least in part on the capability information; and
communicating with a base station to provide a signal to one or more devices communicatively coupled to the first communication apparatus or a second communication apparatus.

13. The method of claim 12, further comprising:
determining connection status information associated with an optical connection between the first communication apparatus and the second communication apparatus; and
configuring at least one of the Wi-Fi antenna or the optical sensor based at least in part on the connection status information.

14. The method of claims 12 or 13, further comprising:
receiving power via a first power unit included in the first communication apparatus from a second power unit included in the second communication apparatus; and
determining the capability information at least partially in response to receiving the power from the second power unit.

15. The method of any of claims 12 to 14, further comprising:
configuring the Wi-Fi antenna to transmit:
a first portion of wireless resources as a backhaul connection to the second communication apparatus or a wireless access point remote from the first communication apparatus and the second communication apparatus; and
a second portion of the wireless resources as communications with the one or more devices.
